# EUROPÄISCHE PATENTSCHRIFT

(11) **EP 3 140 166 B1**
(45) Veröffentlichungstag und Bekanntmachung des Hinweises auf die Patenterteilung: **29.07.2020**
(21) Anmeldenummer: 15718813.7
(22) Anmeldetag: 10.04.2015
(51) Int. Cl.: B60T 8/1761, B60T 8/1763

(54) **VERFAHREN ZUR VERBESSERUNG DES REGELVERHALTENS EINES ELEKTRONISCHEN KRAFTFAHRZEUGBREMSSYSTEMS**
METHOD FOR IMPROVING THE CONTROL BEHAVIOR OF AN ELECTRONIC MOTOR VEHICLE BRAKING SYSTEM
PROCÉDÉ D'AMÉLIORATION DU COMPORTEMENT DE COMMANDE D'UN SYSTÈME ÉLECTRONIQUE DE FREINAGE DE VÉHICULE AUTOMOBILE

(30) Priorität: 09.05.2014 DE 102014208796
(43) Veröffentlichungstag der Anmeldung: 15.03.2017
(73) Patentinhaber: Continental Teves AG & Co. OHG, 60488 Frankfurt am Main (DE)
(72) Erfinder: KERBER, Henning, 64289 Darmstadt (DE); ROSZYK, Mario, 61273 Wehrheim (DE); BURKHARD, Dieter, 55411 Bingen-Büdesheim (DE)
(86) Internationale Anmeldenummer: PCT/EP2015/057892
(87) Internationale Veröffentlichungsnummer: WO 2015/169540

(56) Entgegenhaltungen:
- WO-A1-01/96160
- WO-A1-89/11409
- DE-A1-102009 024 996
- DE-A1-102009 027 482

## Beschreibung

Die Erfindung betrifft ein Verfahren zur Verbesserung des Regelverhaltens eines elektronischen Kraftfahrzeugbremssystems gemäß dem Oberbegriff des Patentanspruchs 1.

Systeme zur Vermeidung eines Blockierens der Fahrzeugräder (Antiblockiersysteme, ABS), zur Regelung des Antriebsschlupfes der angetriebenen Räder (Antriebsschlupfregelsystem, ASR) sind bekannt und umfassen eine Schlupfregelung.

Zur Verhinderung des Blockierens der Räder beim Bremsen wertet das Antiblockiersystem das Drehverhalten der einzelnen Räder aus und bestimmt daraus eine Fahrzeugreferenzgeschwindigkeit. Zusätzlich wird für jedes Rad individuell der Radschlupf gebildet und ausgewertet. Zur Regelung des Radschlupfs werden in der Regel Schwellenwerte des Radschlupfs vorgegeben, die das Einsetzen der Regelung festlegen.

Bei bekannten Verfahren zur Bremsregelung von Fahrzeugen wird angestrebt, eine Überbremsung - also einen überhöhten Schlupf zwischen den Rädern des Fahrzeugs und der Fahrbahnoberfläche - zu verhindern. Das Schlupfoptimum liegt je nach Reifentyp bei ca. 7 bis 15 % Schlupf. Unter "Schlupfeinlauf" wird ein Überschreiten dieses Optimums verstanden, wobei der Reifen auch seine Seitenführungseigenschaften verliert.

Ein entsprechender Regler sollte daher in der Lage sein, das gesteckte Regel Ziel langfristig zu erreichen. Steht nach einer gewissen Zeit eine Regelabweichung immer noch an, regelt der Regler, bspw. durch weitere Druckabbauphasen oder Druckaufbauphasen nach, um die Regelabweichung im weiteren Verlauf zu reduzieren. Das zeitliche Verhalten wird durch die Parametrisierung des Reglers festgelegt.

Eine gattungsgemäße Bremsdruckregelung wird zum Beispiel im Dokument DE 10 2009 024 996 A1 beschrieben.

Bei einem gut ab applizierten Regler stellen sich große Regelabweichungen normalerweise nur dann ein, wenn etwas "Unvorhergesehenes", also eine Störung auftritt und sich das Kraftfahrzeugbremssystem aufgrund dieser Störung nicht erwartungsgemäß verhält.

Die Aufgabe der Erfindung besteht darin, ein eingangs genanntes Verfahren zu schaffen, mit welchem eine drohende große Regelabweichung vor deren Auftreten erkannt wird, so dass durch einen rechtzeitigen Regeleingriff das Auftreten einer solchen Regelabweichung verhindert oder zumindest die Dauer des Auftretens einer solchen Regelabweichung verkürzt wird.

Diese Aufgabe wird gelöst durch ein Verfahren mit den Merkmalen des unabhängigen Anspruchs 1.

Ein solches Verfahren zur Verbesserung des Regelverhaltens eines elektronischen Kraftfahrzeugbremssystems, welches zumindest die Funktion einer Schlupfregelung umfasst, bei dem radindividuell als Kriterium für die Initiierung eines Regeleingriffes bewertete Raddynamikinformationen verwendet werden und mit Regelschwellen für eine Druckabbauphase, eine Druckhaltephase und eine Druckaufbauphase zur Erzeugung entsprechender Bremsmomente mittels eines Fahrzeugbremssystems verglichen werden, zeichnet sich erfindungsgemäß dadurch aus, dass,
- aus einer durch einen Regeleingriff bewirkten Druckänderung an einem Fahrzeugrad die erwartete Beschleunigungsänderung an diesem Rad berechnet wird,
- aus gemessenen Radgeschwindigkeiten als Raddynamikinformation die von der Druckänderung bewirkte tatsächliche Beschleunigungsänderung an dem Fahrzeugrad bestimmt wird, und
- bei einer Abweichung der tatsächlichen Beschleunigungsänderung von der erwarteten Beschleunigungsänderung um ein definiertes Maß das Regelverhalten der Schlupfregelung derart angepasst wird, dass die Abweichung minimal wird.

Mit diesem erfindungsgemäßen Verfahren kann die Güte der Schlupfregelung wesentlich verbessert werden, d.h. die Tiefe von Schlupfeinläufen wird reduziert, insbesondere wird die Dauer des Anliegens einer großen Regelabweichung wesentlich verkürzt.

Die bei diesem erfindungsgemäßen Verfahren relevanten Größen sind zum einen die durch einen Regeleingriff bewirkte Druckänderung, die zu einer entsprechenden Änderung des Bremsmomentes, und zum anderen die durch diese Druckänderung, bzw. durch diese Bremsmomentänderung bewirkte Änderung der Radbeschleunigung, wobei die Änderung der Radbeschleunigung, also mathematisch gesehen die Ableitung der Radbeschleunigung bzw. die zweite Ableitung der Geschwindigkeit im allgemeinen als "Ruck" (jerk) bezeichnet wird und eine differentielle Größe darstellt, die im Regelalgorithmus aus der Differenz von zwei benachbarten Beschleunigungswerten berechnet wird.

Ausgehend von der durch einen Regeleingriff bewirkten Druckänderung wird die dadurch initiierte Beschleunigungsänderung, also die erwartete Beschleunigungsänderung berechnet, wobei hierzu ein Bremsdruckmodell verwendet wird. Mit diesem Bremsdruckmodell wird zunächst der auf das Fahrzeugrad wirkende Bremsdruck und hieraus die erwartete Beschleunigungsänderung berechnet, wobei für das Letztere auch weitere Parameter, wie der Fahrbahnreibwert, Belagreibwert der Bremsscheibe usw. verwendet werden. Diese erwartete Beschleunigungsänderung wird dann mit der tatsächlich einsetzenden aus der Radgeschwindigkeit als deren zweite Ableitung bestimmten Beschleunigungsänderung verglichen.

Nach einer vorteilhaften Ausgestaltung der Erfindung ist das definierte Maß durch ein um den Wert der erwarteten Beschleunigungsänderung definiertes Toleranzband gegeben. Falls der Wert der tatsächlichen Beschleunigungsänderung außerhalb dieses Toleranzbandes liegt, ist die Abweichung zu groß, so dass ein Regeleingriff erforderlich wird.

Eine alternative Ausgestaltung der Erfindung sieht vor, dass das definierte Maß durch einen Wertebereich gegeben ist, dessen Werte mit dem Quotienten aus der tatsächlichen Beschleunigungsänderung und der erwarteten Beschleunigungsänderung verglichen werden.

Nach einer weiteren bevorzugten Weiterbildung der Erfindung wird das Regelverhalten durch eine Änderung der Regler-Verstärkungsfaktoren und/oder durch eine Änderung der Reglerfrequenz und/oder durch eine Änderung der Pulshöhe betreffend die Druckanforderung angepasst.

Da die Signale zur Berechnung der erwarteten Beschleunigungsänderung sowie die Signale zur Bestimmung der tatsächlichen Beschleunigungsänderung sich physikalisch auf den gleichen Zeitpunkt beziehen müssen, ist erfindungsgemäß vorgesehen, dass die für die Bestimmung der erwarteten Beschleunigungsänderung verwendeten Druckänderungssignale sowie die für die Bestimmung der tatsächlichen Beschleunigungsänderung verwendeten Radgeschwindigkeitssignale zeitlich aufeinander synchronisiert werden.

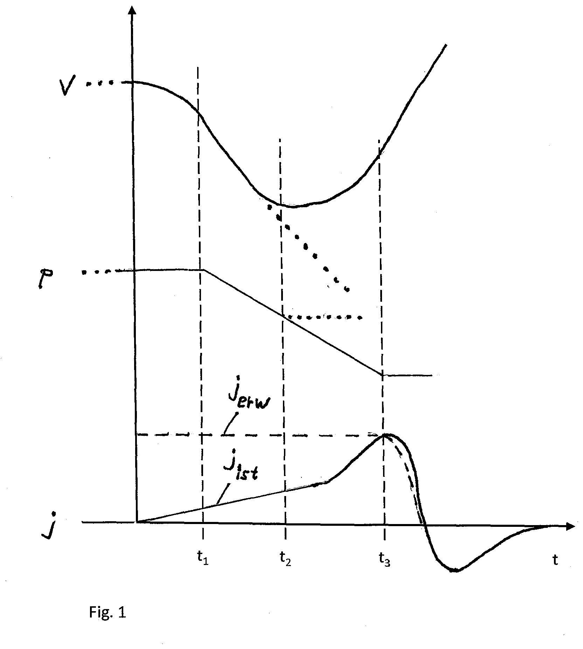

Im Folgenden wird das erfindungsgemäße Verfahren unter Bezugnahme auf die beigefügte Figur 1 näher erläutert. Diese Figur 1 zeigt die an einem Fahrzeugrad auftretende Verläufe der Geschwindigkeit v, des Bremsdruckes p sowie der erwarteten und tatsächlichen Beschleunigungsänderung, die als differenzielle Größe ein Ruckwert (jerk) j darstellt.

Im Folgenden wird von einer ABS-Regelung eines Kraftfahrzeugbremssystems mit einem ABS-Regler ausgegangen, mit welchem das Bremsverhalten der Fahrzeugräder eines Fahrzeugs geregelt und dabei ein überhöhter Schlupf verhindert wird.

Die Figur 1 zeigt einen Ausschnitt aus einer solchen ABS-Regelung eines Fahrzeugrades, welches sich in einer instabilen Phase, also in einer Bremsphase mit einem Schlupfeinlauf befindet.

Daher wird zum Zeitpunkt t1 eine Druckabbauphase durch den ABS-Regler eingeleitet, mit der Folge dass der Bremsdruck p und damit auch die Radgeschwindigkeit v entsprechend der Darstellung nach Figur 1 abnimmt.

Auf der Basis der Druckänderung an dem Fahrzeugrad wird aus dem Gradienten des Drucks p eine erwartete Beschleunigungsänderung als Ruckwert jerw mittels eines Bremsdruckmodells berechnet. Da der Druck p für t < t1 und t > t3 konstant ist, ergibt sich für die erwartete Beschleunigungsänderung jerw der Wert Null. Mit Beginn des Druckabbaus, also kurz nach dem Zeitpunkt t1 wechselt dieses berechnete Signal jerw auf einen positiven Wert, der aufgrund des konstanten Gradienten des Drucks bis zum Ende des Druckabbaus zum Zeitpunkt t3 konstant bleibt, um anschließend wieder auf null abzufallen.

Die tatsächliche Beschleunigungsänderung wird als Ruckwert jist ermittelt und aus der Radgeschwindigkeit v als 2. Ableitung berechnet. Solange der Geschwindigkeitsverlauf v nach rechts gekrümmt ist, zeigt der tatsächliche Ruck jist negative Werte und wird positiv, wenn der Geschwindigkeit Verlauf v in eine Linkskrümmung übergeht (vgl. Figur 1).

Während der gesamten ABS-Regelung wird der tatsächliche Ruckwert jist mit dem erwarteten Ruckwert jerw verglichen.

In der Regel unterscheiden sich diese beiden Größen jerw und jist nur geringfügig im Rahmen eines vorgegebenen Maßes, d.h. die ABS-Regelung verhält sich erwartungsgemäß.

Tritt jedoch in Figur 1 die beispielhaft dargestellte Situation auf, dass die Differenz dieser beiden Größen jerw und jist zum Zeitpunkt t2 ein definiertes Maß überschreitet, bedeutet dies, dass die sich einstellende Beschleunigungsänderung jist wesentlich kleiner ist als die erwartete Beschleunigungsänderung jerw.

Das definierte Maß ist durch ein um den Wert der erwarteten Beschleunigungsänderung jerw definiertes Toleranzband gegeben. Es wird von einer Störung ausgegangen, wenn die tatsächliche Beschleunigungsänderung jist außerhalb dieses Toleranzbandes liegt. Damit droht eine große Regelabweichung, die zu einem lang andauernden Schlupfeinlauf führen kann, der nur über mehrere Regelschleifen korrigiert werden kann.

Die Ursache einer solchen Störung, also die Abweichung der tatsächlichen Beschleunigungsänderung jist von der erwarteten Beschleunigungsänderung jerw über das definierte Maß hinaus kann darin liegen, dass bspw. die Radlast abnimmt, ein abnehmender Fahrbahnreibwert vorliegt (aufgrund einer Änderung der Fahrbahnoberfläche) und/oder der Reifenreibwert aufgrund des Schlupfes abnimmt. Die Ursache kann auch auf der Aktuatorseite des Fahrzeugbremssystems liegen, bspw. kann ein kleinerer Belagreibwert vorliegen, als bei der Berechnung des erwarteten Ruckwertes jerw angenommen wurde, wodurch der Bremsmomentenabbbau tatsächlich kleiner ist als erwartet.

Das definierte Maß zur Erkennung einer Störung kann auch durch einen Wertebereich angegeben werden, dessen Werte mit dem Quotienten aus der tatsächlichen Beschleunigungsänderung jist und der erwarteten Beschleunigungsänderung jerw verglichen werden. Falls dieser Quotient außerhalb dieses Wertebereiches liegt, wird von einer Störung ausgegangen.

Liegt nun eine in der oben genannten Weise detektierte Abweichung der tatsächlichen Beschleunigungsänderung jist von der erwarteten Beschleunigungsänderung jerw um das definierte Maß vor, greift der ABS-Regler ein und führt eine Korrektur zum Zeitpunkt t2 durch, indem bspw. über eine Parameterumschaltung die Druckanforderung so korrigiert wird, dass rechtzeitig der Druckabbau fortgesetzt wird und infolgedessen zu einem Zeitpunkt t3 der tatsächliche Ruckwert jist dem erwarteten Ruckwert jerw im Rahmen des definierten Maßes folgt, wie dies in Figur 1 dargestellt ist. Ab diesem Zeitpunkt t3 ist die Abweichung zwischen diesen beiden Größen jerw und jist nur geringfügig und liegt damit nicht mehr außerhalb des definierten Maßes.

In Figur 1 ist auch die Situation dargestellt, wenn trotz der außerhalb des definierten Maßes liegenden Abweichung der beiden Größen jerw und jist keine frühzeitige Verlängerung der Druckabbauphase durchgeführt wird. Der Druckabbau würde dann zum Zeitpunkt t2 beendet werden (vgl. Figur 1, gestrichelt dargestellter Bremsdruckverlauf p), mit der Folge dass auch der Schlupf weiter ansteigt, also der Schlupfeinlauf verlängert wird (vgl. Figur 1, gestrichelt dargestellter Geschwindigkeitsverlauf v) . Auf diesen Schlupfeinlauf würde die ABS-Regelung erst zu einem späteren Zeitpunkt, also nach einer Abbau-Pause mit einem Druckabbau reagieren, mit der Folge, dass die Geschwindigkeit v nach den Zeitpunkt t2 weiter abfallen würde.

Mit dem erfindungsgemäßen Verfahren wird jedoch aufgrund der außerhalb des definierten Maßes liegenden Abweichung zwischen dem erwarteten Ruckwert jerw und dem tatsächlichen Ruckwert jist der Druckabbau fortgesetzt oder sogar verstärkt.

Bei einer außerhalb des definierten Maßes liegenden Abweichung der beiden Ruckwerte jerw und jist kann das Regelverhalten des ABS-Reglers auch darin bestehen, die Regler-Verstärkungsfaktoren, insbesondere des I-Anteils (auch die anderen Anteile) zu ändern, die Pausenzeit der Regelung zu reduzieren, also die Regelfrequenz zu erhöhen oder die Pulshöhe zu verändern.

Bei der Bestimmung bzw. Berechnung der Größen jerw und jist ist zu beachten, dass die zugehörigen Signale hinsichtlich der Druckänderung und der Beschleunigungsänderung aufeinander synchronisiert werden, dass sie, auch wenn sie im ABS-Regler gleichzeitig berechnet werden, sich physikalisch nicht auf den gleichen Zeitpunkt beziehen.

Da die mathematische Ableitung in ABS-Regler rechentechnisch meistens über eine Differenzbildung zwischen der jeweiligen Signalgröße zum aktuellen Zeitpunkt der Signalgröße zu einem vorhergehenden Zeitpunkt bestimmt wird, kommt es hier zu einem Zeitverzug, der sich bei mehrfachen Ableitungen addiert. Bei der Synchronisierung ist daher das tatsächlich "älteste" Signal relevant und von den physikalisch neueren Signalen müssen mittels einer Zwischenspeicherung ältere Werte zur Verfügung gestellt werden. Wird eines der verwendeten Signale gefiltert, sind in entsprechender Weise auch die anderen verwendeten Signale in gleicher Weise zu filtern.

Das oben beschriebene Ausführungsbeispiel bezieht sich auf den Fall "Druckabbau", um eine Wiederbeschleunigung zu er-möglichen. Natürlich gilt es auch für den Fall "Druckaufbau", um die Wiederbeschleunigung zu begrenzen.

Das dargestellte Verfahren eignet sich nicht nur für die ABS-Regelung, solange das Fahrzeugrad im instabilen Bereich der µ-Schlupfkurve ist, sondern auch allgemein für eine Schlupfregelung im instabilen Bereich eines Fahrzeugrades.

## Patentansprüche

1. Verfahren zur Verbesserung des Regelverhaltens eines elektronischen Kraftfahrzeugbremssystems, umfassend zumindest die Funktion einer Schlupfregelung, bei dem radindividuell als Kriterium für die Initiierung eines Regeleingriffes bewertete Raddynamikinformationen verwendet werden und mit Regelschwellen für eine Druckabbauphase, eine Druckhaltephase und eine Druckaufbauphase zur Erzeugung entsprechender Bremsmomente mittels eines Fahrzeugbremssystems verglichen werden, wobei
- aus einer durch einen Regeleingriff bewirkten Druckänderung an einem Fahrzeugrad die erwartete Beschleunigungsänderung (j_{erw}) an diesem Rad berechnet wird,
- aus gemessenen Radgeschwindigkeiten als Raddynamikinformation die von der Druckänderung bewirkte tatsächliche Beschleunigungsänderung (jᵢₛₜ) an dem Fahrzeugrad bestimmt wird,
- bei einer Abweichung der tatsächlichen Beschleunigungsänderung (jᵢₛₜ) von der erwarteten Beschleunigungsänderung (j_{erw}) um ein definiertes Maß das Regelverhalten der Schlupfregelung derart angepasst wird, dass die Abweichung minimal wird,
**dadurch gekennzeichnet, dass**
- die für die Bestimmung der erwarteten Beschleunigungsänderung (j_{erw}) verwendeten Druckänderungssignale sowie die für die Bestimmung der tatsächlichen Beschleunigungsänderung (jᵢₛₜ) verwendeten Radgeschwindigkeiten Signale zeitlich aufeinander synchronisiert werden.

2. Verfahren nach Anspruch 1, **dadurch gekennzeichnet, dass** das definierte Maß durch ein um den Wert der erwarteten Beschleunigungsänderung (j_{erw}) definiertes Toleranzband gegeben ist.

3. Verfahren nach Anspruch 1, **dadurch gekennzeichnet, dass** das definierte Maß durch einen Wertebereich gegeben ist, dessen Werte mit dem Quotienten aus der tatsächlichen Beschleunigungsänderung (jᵢₛₜ) und der erwarteten Beschleunigungsänderung (j_{erw}) verglichen werden.

4. Verfahren nach einem der vorhergehenden Ansprüche, **dadurch gekennzeichnet, dass** das Regelverhalten durch eine Änderung der Regler-Verstärkungsfaktoren und/oder durch eine Änderung der Reglerfrequenz und/oder durch eine Änderung der Pulshöhe betreffend die Druckanforderung angepasst wird.

## Claims

1. Method for improving the control behaviour of an electronic motor vehicle brake system, comprising at least the function of a slip control system, in which wheel dynamics information which is evaluated on a wheel-specific basis as a criterion for the initiation of a control intervention is used and compared with controlled thresholds for a pressure reduction phase, a pressure holding phase and a pressure increasing phase for generating corresponding braking torques by means of a vehicle brake system,
wherein
- the expected change in acceleration (jₑₓₚ) at a vehicle wheel is calculated from a change in pressure at this vehicle wheel which is brought about by a control intervention
- the actual change in acceleration (j_{act}) at the vehicle wheel, which is brought about by the change in pressure, is determined from measured wheel speeds as wheel dynamics information,
- when an actual change in acceleration (j_{act}) differs from the expected change in acceleration (jₑₓₚ) by a defined amount, the control behaviour of the slip control system is adapted in such a way that the difference is minimized,
**characterized in that**
- the pressure change signals which are used for the determination of the expected change in acceleration (jₑₓₚ) and the wheel speed signals which are used for the determination of the actual change in acceleration (j_{act}) are synchronized with one another.

2. Method according to Claim 1, **characterized in that** the defined amount is given by a tolerance band which is defined around the value of the expected change in acceleration (jₑₓₚ) .

3. Method according to Claim 1, **characterized in that** the defined amount is given by a value range whose values are compared with the quotient formed from the actual change in acceleration (j_{act}) and the expected change in acceleration (jₑₓₚ).

4. Method according to one of the preceding claims, **characterized in that** the control behaviour is adapted by a change in the controller gain factors and/or by changing the controller frequency and/or by changing the pulse height relating to the pressure request.

## Revendications

1. Procédé d'amélioration du comportement de régulation d'un système de freinage de véhicule automobile électronique, comprenant au moins la fonction d'une régulation du patinage, avec lequel des informations dynamiques de roue évaluées sont utilisées individuellement pour chaque roue en tant que critère pour l'initiation d'une intervention de régulation et sont comparées avec des seuils de régulation pour une phase de mise en pression, une phase de maintien de pression et une phase de mise hors pression en vue de générer des moments de freinage correspondants au moyen d'un système de freinage de véhicule,
- la modification de l'accélération (j_{erw}) attendue au niveau d'une roue de véhicule étant calculée à partir d'une modification de la pression provoquée par une intervention de régulation au niveau de cette roue,
- la modification de l'accélération (jᵢₛₜ) réellement produite par la modification de la pression au niveau de la roue de véhicule étant déterminée à partir des vitesses de roue mesurées en tant qu'information dynamique de roue,
- en cas d'écart entre la modification de l'accélération (jᵢₛₜ) réelle et la modification de l'accélération (j_{erw}) attendue d'une proportion définie, le comportement de régulation de la régulation du patinage étant adapté de telle sorte que l'écart soit minimal,
**caractérisé en ce que**
- les signaux de modification de la pression utilisés pour la détermination de la modification de l'accélération (j_{erw}) attendue ainsi que les signaux de vitesses de roue utilisées pour la détermination de la modification de l'accélération (jᵢₛₜ) réelle sont synchronisés dans le temps les uns sur les autres.

2. Procédé selon la revendication 1, **caractérisé en ce que** la proportion définie est donnée par une bande de tolérance définie autour de la valeur de la modification de l'accélération (j_{erw}) attendue.

3. Procédé selon la revendication 1, **caractérisé en ce que** la proportion définie est donnée par une plage de valeurs dont les valeurs sont comparées avec le quotient de la modification de l'accélération (jᵢₛₜ) réelle et de la modification de l'accélération (j_{erw}) attendue.

4. Procédé selon l'une des revendications précédentes, **caractérisé en ce que** le comportement de régulation est adapté par une modification des facteurs de gain de régulateur et/ou par une modification de la fréquence de régulateur et/ou par une modification de la hauteur d'impulsion concernant la demande de pression.
